# FASCICULE DE BREVET EUROPEEN

(11) **EP 2 170 576 B1**
(45) Date de publication et mention de la délivrance du brevet: **03.04.2019**
(21) Numéro de dépôt: 08826672.1
(22) Date de dépôt: 25.07.2008
(51) Int. Cl.: B29C 44/12, G10K 11/168, B60R 13/08, B29C 44/04, B29L 31/30, B29K 105/04, B29K 105/26, B29K 75/00, B29K 105/12

(54) **COMPOSANT MOULÉ D'INSONORISATION, ET SON PROCÉDÉ DE FABRICATION**
LÄRMSCHUTZFORMKOMPONENTE UND VERFAHREN ZU IHRER HERSTELLUNG
MOULDED SOUNDPROOFING COMPONENT, AND MANUFACTURING METHOD THEREOF

(30) Priorité: 25.07.2007 FR 0705430
(43) Date de publication de la demande: 07.04.2010
(73) Titulaire: Faurecia Automotive Industrie, 92000 Nanterre (FR)
(72) Inventeur: MARCEL, Valérie, F-55150 Brandeville (FR); DESHAYES, Guillaume, Tokyo 150011 (JP)
(74) Mandataire: Lavoix
(86) Numéro de dépôt international: PCT/FR2008/051402
(87) Numéro de publication internationale: WO 2009/016321

(56) Documents cités:
- EP-A- 1 702 883
- US-A- 5 053 271
- US-A- 5 334 338
- US-A1- 2001 015 222
- US-A1- 2005 126 848

## Description

La présente invention concerne un procédé de fabrication d'un composant moulé d'insonorisation, ainsi que le composant obtenu par sa mise en oeuvre.

Des composants d'insonorisation sont montés à de nombreux emplacements d'espaces sensiblement clos, tels que l'habitacle d'un véhicule automobile. De tels composants sont par exemple disposés sur le plancher ou le tablier.

Parmi les nombreux dispositifs d'insonorisation connus destinés aux automobiles, on peut citer celui qui est décrit dans le document US-6 145 617. Il comprend deux couches poreuses, placées sur un support avec interposition de préférence d'une couche d'air. Les deux couches poreuses doivent communiquer en permettant le passage de l'air. Ce dispositif d'insonorisation a l'avantage d'être léger, bien que ses propriétés acoustiques ne soient pas toujours suffisantes. Pour réaliser un tel système, on pourrait envisager d'injecter, sur une première couche poreuse, une composition polymère de moussage pour la formation de la seconde couche poreuse à cellules ouvertes. Cependant, une telle opération formerait une zone étanche entre les deux couches, contraire au principe de fonctionnement de ce dispositif, de sorte que celui-ci perdrait l'essentiel de ses propriétés d'insonorisation.

Un autre dispositif plus ancien, décrit dans le document US-4 131 664, constitue un panneau d'insonorisation qui comporte une membrane ou un film imperméable disposé entre deux couches de feutre de densités différentes. Dans ce système, la membrane ou le film empêche tout passage d'air entre les deux couches.

L'invention concerne la fabrication de composants d'insonorisation du second type général décrit dans le document US-4 131 664, c'est-à-dire comprenant une couche intermédiaire étanche à l'air.

L'inconvénient des composants d'insonorisation de ce second type général est qu'ils sont relativement coûteux. En particulier, pour réaliser un tel composant, il est nécessaire, à partir d'une première couche poreuse, d'effectuer une première opération de disposition d'une couche intermédiaire relativement imperméable, puis une seconde opération de disposition de l'autre couche poreuse.

US2005/126848 décrit un composant d'insonorisation tricouches. EP 1 702 883 décrit un procédé de fabrication d'un siège de véhicule.

L'invention a pour objet de réduire considérablement le coût de fabrication de tels composants moulés d'insonorisation.

Selon l'invention, la couche intermédiaire imperméable à l'air et l'une des couches poreuses d'insonorisation sont réalisées simultanément, dans une seule étape d'injection, si bien que le coût du produit réalisé peut être réduit.

Plus précisément, selon l'invention, au moins à sa surface tournée du côté qui doit coopérer avec d'autres couches, un première couche poreuse présente une porosité ouverte. La couche intermédiaire et l'autre couche poreuse sont ensuite réalisées en une seule étape d'injection, d'une manière telle qu'une partie de la composition fluide injectée pénètre dans la structure poreuse de la première couche sur une certaine profondeur. Lors du moussage de la composition fluide injectée pour la formation de la seconde couche poreuse, le matériau contenu dans la porosité de la première couche poreuse ne peut pratiquement pas former de mousse, de sorte qu'il reste, sur la profondeur de pénétration dans la première couche, une couche intermédiaire densifiée constituée des matériaux des deux couches poreuses.

Ainsi, l'invention concerne un procédé de fabrication d'un composant moulé d'insonorisation selon la revendication 1.

L'injection est réalisée dans des conditions de débit, de température et de pression réglées afin que la couche intermédiaire possède l'épaisseur voulue, compte tenu des propriétés de résistance au passage de l'air, de porosité, de densité, de structure, de surface, etc. de la première couche poreuse.

Ainsi, le procédé peut comprendre la définition d'une épaisseur voulue de la couche intermédiaire, puis le réglage du débit, de la température et de la pression lors de l'injection pour que la couche intermédiaire présente l'épaisseur voulue.

Lorsque la composition polymère injectée est formée par mélange de deux composants au moins, la composition injectée est réalisée dans des conditions de rapport des deux composants de la composition telles que la couche intermédiaire possède l'épaisseur voulue.

De préférence, la disposition de la première couche comprend la pose d'une couche d'un matériau poreux sur une paroi de moule, le matériau poreux étant choisi parmi un feutre et une mousse. Celle-ci peut être refendue, injectée, extrudée, etc. Selon un perfectionnement dans lequel le matériau poreux est muni d'une couche de faible perméabilité, l'étape de disposition de la première couche comprend la pose de la couche du matériau poreux de manière que la couche de faible perméabilité soit placée contre la paroi du moule.

De préférence, le procédé comprend une étape postérieure de perforation, effectuée d'un côté au moins du composant et affectant au moins une partie de l'épaisseur du composant.

Avantageusement le procédé selon l'invention comprend l'une ou plusieurs des caractéristiques des revendications 2 à 7.

La divulgation a également pour objet un procédé de fabrication d'un véhicule automobile comprenant une phase de fabrication d'un composé moulé d'isolation suivant le procédé défini ci-dessus et une phase de disposition du composant moulé d'isolation obtenu sur le plancher ou le tablier du véhicule.

L'invention concerne aussi un composant moulé d'insonorisation selon la revendication 8.

L'épaisseur de la couche intermédiaire étanche à l'air est déterminée par la profondeur de pénétration de la matière de la seconde couche dans la structure poreuse du matériau de la première couche.

De préférence, la couche intermédiaire a une épaisseur d'au moins 0,1 mm.

De préférence, la matière de la seconde couche est un polyuréthanne.

Avantageusement encore, le composant selon l'invention comprend l'une ou plusieurs des caractéristiques des revendications 9 à 13 ou l'une des caractéristiques suivantes :
- la première couche poreuse présente au moins une couche poreuse de résistance au passage de l'air comprise entre 200 N.m⁻³.s et 3500 N.m⁻³.s
- la couche de moquette est disposée sur la couche de plus grande résistance au passage de l'air.

La divulgation a également pour objet un véhicule automobile comprenant un plancher et un tablier, et un composant moulé d'isolation tel que défini ci-dessus, disposé sur l'un du plancher et du tablier.

L'invention présente des avantages importants pour la réalisation de composants moulés d'insonorisation, aussi bien plans que de forme quelconque obtenue par moulage.

D'abord, la première couche poreuse d'insonorisation peut être de types très divers (couche de mousse, feutre, non tissé, etc.), et elle peut être réalisée à l'avance et placée dans le moule. La caractéristique essentielle est que la face du matériau de la première couche, tournée du côté où doivent être placées les autres couches, doit être poreuse, c'est-à-dire munie de cavités au moins sur la profondeur voulue pour la formation de la couche intermédiaire.

Comme une seule étape permet la réalisation de la couche intermédiaire et de l'autre couche poreuse, et comme la nature du matériau de cette autre couche peut être choisie parmi de nombreuses compositions fluides de moussage de matière plastique, la gamme d'application de l'invention est extrêmement large.

L'avantage de cette grande latitude de sélection des matériaux des deux couches poreuses s'ajoute à l'avantage de faible coût dû à la réduction du nombre d'étapes de fabrication, et donc du coût de l'installation de fabrication.

D'autres caractéristiques et avantages de l'invention seront mieux compris à la lecture de la description détaillée et des exemples qui suivent, en référence aux dessins annexés sur lequel :
- la figure 1 est une vue partielle d'un exemple de composant d'insonorisation réalisé par le procédé selon l'invention ;
- la figure 2 est une vue partielle d'un autre exemple de composant d'insonorisation réalisé par le procédé selon l'invention ;
- la figure 3 est une vue analogue à la Figure 1 d'un troisième composant d'insonorisation selon l'invention propre à être appliqué sur un plancher d'un véhicule automobile ;
- la figure 4 est une vue analogue à la Figure 1 d'un quatrième composant d'insonorisation selon l'invention propre à être appliqué sur un plancher d'un véhicule automobile ;
- la figure 5 est une vue analogue à la Figure 1 d'un cinquième composant d'insonorisation selon l'invention propre à être appliqué sur un plancher d'un véhicule automobile ;
- la figure 6 est un graphe illustrant les courbes de l'indice d'affaiblissement en dB en fonction de la fréquence pour deux composants d'insonorisation selon l'invention et pour un composant d'insonorisation de l'état de la technique ; et
- la figure 7 est un graphe illustrant les courbes du coefficient d'absorption en champ diffus en fonction de la fréquence pour deux composants d'insonorisation selon l'invention et pour un composant d'insonorisation de l'état de la technique.

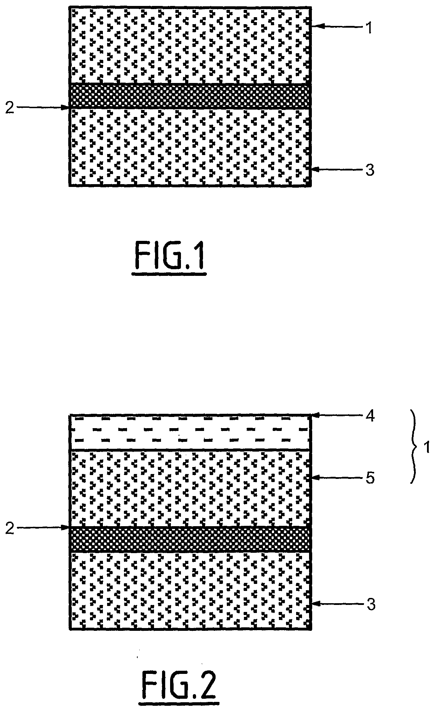

Sur les figures 1 et 2, la référence 1 désigne la première couche poreuse, soit simple comme indiqué sur la figure 1, soit complexe comme indiqué sur la figure 2. Sur cette dernière, la couche 1 comporte une couche poreuse 5 dont la surface externe porte une couche 4 de plus grande résistance au passage de l'air. Par exemple, la couche 5 peut être un feutre, et la couche 4 un non-tissé.

La référence 3 désigne la seconde couche poreuse de mousse formée par injection d'une composition fluide, et la référence 2 la couche intermédiaire formée par la matière de la composition fluide de moussage piégée dans la partie superficielle de la première couche poreuse 1.

On considère maintenant des exemples de réalisation de deux composants moulés d'insonorisation selon l'invention.

### Exemple 1

Dans un premier mode de réalisation, une nappe d'un feutre de fibres naturelles et/ou synthétiques est découpée dans un rouleau de feutre, à la configuration périphérique du composant d'insonorisation voulu.

Cette nappe de feutre est destinée à constituer la première couche d'insonorisation du composant, et elle est disposée dans un moule d'injection, sur la paroi d'un premier demi-moule. Le moule est alors fermé, et une composition fluide de moussage est injectée dans la cavité du moule, entre la nappe de feutre et l'autre demi-moule du moule qui délimite la cavité de moulage.

Les conditions de pression, de température et de débit d'injection sont déterminées, compte tenu des propriétés de résistance au passage de l'air, de porosité, de densité, de structure, de surface, etc. de la première couche poreuse, de manière que la composition fluide injectée pénètre de la profondeur voulue par la surface accessible du feutre. Par exemple, la composition fluide pénètre dans le feutre sur une épaisseur d'environ 0,3 mm. Comme la composition fluide contenue dans la couche superficielle du feutre ne dispose pas d'un espace suffisant pour se dilater, le moussage n'est pratiquement pas possible dans cette région. Dans une variante, le second demi-moule peut coulisser dans le premier et peut être écarté pour que la mousse subisse une expansion et que la composition fluide injectée forme la mousse de densité voulue.

Lorsque la couche de mousse injectée est suffisamment stabilisée, le moule est ouvert et le composant moulé est extrait. Suivant la forme de la cavité du moule, le composant peut être plan ou de toute configuration voulue. Il peut être utilisé tel quel, ou il peut subir une opération supplémentaire, par exemple de perforation et/ou de finition des bords.

La couche intermédiaire, constituée par le matériau de la composition injectée piégée dans une région superficielle du feutre et par le matériau du feutre, et la couche de mousse injectée sont ainsi réalisées dans un seul moule, en une seule opération. Le produit obtenu peut être ainsi terminé.

On conçoit que le coût du composant obtenu est ainsi réduit par rapport à celui des composants qu'on obtient avec les procédés connus qui comprennent soit la formation d'un stratifié, puis son moulage à la forme, soit la réalisation par empilement des trois couches dans un moule, avec au moins deux opérations distinctes, l'une pour la disposition de la couche intermédiaire et l'autre pour la fabrication de la seconde couche d'insonorisation.

Dans une variante de cet exemple, la première nappe de feutre est remplacée par une couche de mousse d'épaisseur déterminée. Par exemple, cette couche peut avoir une porosité ouverte à une face, et une peau à son autre face. Une telle couche peut être obtenue par tranchage dans son plan médian d'une couche de mousse d'épaisseur double.

### Exemple 2

Dans un second exemple, contrairement au premier exemple, la première couche n'est pas formée d'un feutre, mais est constituée d'une couche de mousse injectée. Ce procédé présente l'avantage de permettre la réalisation d'un composant d'insonorisation dont la première couche poreuse a une épaisseur variable, adaptée à la fonction particulière du composant.

Dans ce dernier exemple, les matériaux de la première et de la seconde couche poreuse d'insonorisation doivent être différents, sinon par leur nature, tout au moins par leurs propriétés d'insonorisation, par exemple leurs propriétés de résistance au passage de l'air, de porosité, de densité, de structure, de surface, etc.

Ces propriétés sont telles que la couche intermédiaire est pratiquement étanche. A cet effet, cette couche intermédiaire a de préférence une épaisseur d'au moins 0,1 mm.

Les composants d'insonorisation représentés sur les Figures 1 et 2 sont avantageusement destinés à être disposés sur une tôle du tablier d'un véhicule automobile.

La première couche poreuse 1, dans le cas de la Figure 1 ou la couche poreuse 5 dans le cas de la Figure 2, est par exemple formée par un feutre absorbant, comme un feutre comprenant avantageusement un pourcentage élevé de microfibres, comme par exemple plus de 50%, avantageusement plus de 80% de microfibres.

Par « feutre », on entend au sens de la présente invention, un mélange de fibres de base et de liant. Les fibres peuvent être des fibres nobles et/ou recyclées, naturelles ou synthétiques, d'une seule ou de plusieurs natures. Des exemples de fibres naturelles pouvant être utilisées sont le lin, le coton, le chanvre, le bambou etc. Des exemples de fibres synthétiques pouvant être utilisées sont les fibres de verre, le kevlar, le polyamide, l'acrylique, le polyester, le polypropylène.

Le liant est par exemple une résine ou des fibres liantes qui présentent un point de fusion inférieur à celui des fibres de base à lier. Des exemples de résines sont les résines époxy, ou les résines phénoliques. Des exemples de fibres liantes sont le polypropylène, le polyéthylène, le polyamide, le polyester, ou les polyesters bicomposants.

Par « microfibres », on entend des fibres de tailles inférieures à 0,9 dtex, avantageusement inférieures à 0,7 dtex.

Dans une variante, le feutre de la couche poreuse 1, respectivement 5 contient de la matière recyclée provenant de déchets d'origine interne ou externe, par exemple de chutes de pièces d'équipements automobiles, de rebuts de fabrication, ou de pièces de fin de vie d'un véhicule. Ces déchets sont par exemple broyés et incorporés dans le feutre sous forme de morceaux de matière divisée constitués par des agglomérats, des flocons ou des particules. Les composants des déchets peuvent être séparés avant ou pendant le broyage.

Dans la variante de couche poreuse 1, respectivement 5 en mousse, la mousse est à cellules ouvertes. Elle est par exemple réalisée en polyuréthanne. La mousse est injectée ou refendue.

En variante, la mousse injectée ou refendue contient également de la matière recyclée, telle que définie ci-dessus, ou une charge minérale, ou encore un polyol tel que du « bio-polyol ».

En variante, la couche poreuse 1, respectivement 5 est réalisée à base d'une mousse à cellules ouvertes de tortuosité élevée, telle que décrite dans la demande WO 2007/006950 de la Demanderesse.

Une telle mousse présente une tortuosité supérieure à 1,4 et avantageusement comprise entre 1,4 et 3.

Cette tortuosité est mesurée par détermination de la pente de la courbe représentant la variation du carré de l'indice de réfraction pour la longueur d'onde acoustique utilisée, en fonction de l'inverse de la racine carrée de la fréquence.

L'épaisseur de la première couche poreuse 1, respectivement 5 est par exemple comprise entre 4 mm et 12 mm, par exemple égale à 8 mm.

Dans le cas d'une couche poreuse 1, respectivement 5 en feutre, la masse surfacique de la couche poreuse 1, respectivement 5 est comprise avantageusement entre 200 g/m2 et 2000 g/m2, par exemple égale à 1200 g/m2. Dans le cas d'une couche poreuse 1, respectivement 5 en mousse, la densité de la couche est comprise avantageusement entre 10 kg/m3 et 80 kg/m3, en étant par exemple environ égale à 70 kg/m3.

La porosité de cette couche 1, respectivement 5 est choisie pour que la résistance au passage de l'air de cette couche soit par exemple comprise entre 200 N.m-3.s et 3500 N.m-3.s, par exemple égale à 2000 N.m-3.s.

La résistance et la résistivité au passage de l'air sont mesurées par la méthode décrite dans la thèse "Mesures des paramètres caractérisant un milieu poreux. Etude expérimentale du comportement acoustique des mousses aux basses fréquences.", Michel HENRY, soutenue le 3 octobre 1997 à l'Université du Mans.

La couche intermédiaire 2 est étanche à l'air. Comme on l'a vu plus haut, elle est réalisée par le mélange entre le matériau poreux contenu dans la première couche poreuse 1, respectivement 5 et la composition fluide de moussage injectée pour réaliser la deuxième couche poreuse 3, qui obture de manière étanche les pores et/ou interstices définis par le matériau poreux.

L'épaisseur de la couche intermédiaire 2 est avantageusement inférieure à 20% de l'épaisseur de la couche poreuse 1, respectivement 5 et est avantageusement supérieure à 10% de l'épaisseur de la couche poreuse 1, respectivement 5.

Elle est avantageusement supérieure à 0,1 mm et comprise entre 0,5 mm et 3mm, avantageusement égale à environ 1,5mm.

Cette épaisseur est réglée, en fonction de la densité du matériau poreux constituant la première couche poreuse, lors du procédé de fabrication du composant, en modifiant les paramètres d'injection de la mousse, comme le débit d'injection et la pression d'injection. En effet, plus la densité du matériau poreux est élevée, et moins la composition fluide de moussage injectée pour réaliser la deuxième couche poreuse 3 pénètre dans le matériau poreux.

La densité de la couche intermédiaire 2 est supérieure à la densité de la première couche poreuse 1 dans le cas de la Figure 1, et à la densité de la couche poreuse 5 dans le cas de la Figure 2. Elle est aussi supérieure à la densité de la deuxième couche poreuse 3.

La masse surfacique de la couche intermédiaire est avantageusement comprise entre 100 g/m2 et 1000 g/m2, avantageusement sensiblement égale à 320 g/m2.

Pour assurer de bonnes propriétés acoustiques, la seconde couche poreuse 3 est réalisée, comme on l'a vu plus haut, à base d'une mousse viscoélastique injectée présentant des propriétés d'isolation acoustique.

La mousse est à cellules ouvertes. Elle est par exemple réalisée en polyuréthanne. En variante, la mousse contient de la matière recyclée ou une charge minérale ou encore un polyol tel que du « bio-polyol ».

Par « matière recyclée », on entend une matière provenant de déchets d'origine interne ou externe, par exemple de chutes de pièces d'équipements automobiles, de rebuts de fabrication, ou de pièces de fin de vie d'un véhicule. Ces déchets sont par exemple broyés et incorporés dans la mousse sous forme de morceaux de matière divisée constitués par des agglomérats, des flocons ou des particules. Les composants des déchets peuvent être séparés avant ou pendant le broyage.

La masse volumique de la couche 3 est comprise entre 30 kg/m3 et 70 kg/m3 et notamment environ 50 kg/m3.

La couche 3 est poreuse et présente une porosité adaptée pour offrir une résistivité au passage de l'air avantageusement comprise entre 10 000 N.m-4.s et 90 000 N.m-4.s, de préférence 30 000 N.m-4.s.

Pour présenter des propriétés de ressort, la deuxième couche poreuse 3 présente avantageusement un module élastique compris entre 100 Pa et 100 000 Pa, notamment environ 40000 Pa.

Dans l'exemple de la Figure 2, la couche résistive 4 est avantageusement réalisée à base d'un non-tissé résistif ou d'un matériau ayant une résistance au passage de l'air définie, tel qu'un feutre de faible grammage, un textile, etc.

Elle présente une épaisseur inférieure à celle de la couche poreuse 5 et à celle de la deuxième couche poreuse 3.

Sa masse surfacique est comprise entre 20 g/m2 et 200 g/m2.

La couche résistive 4 est poreuse pour présenter une résistance au passage de l'air qui est comprise entre 200 N.m-3.s et 2000 N.m-3.s, avantageusement égale à 500 N.m-3.s environ.

La couche résistive 4 est fixée sur la couche 5 par fixation mécanique tel qu'un collage, ou un laminage ou par fixation chimique.

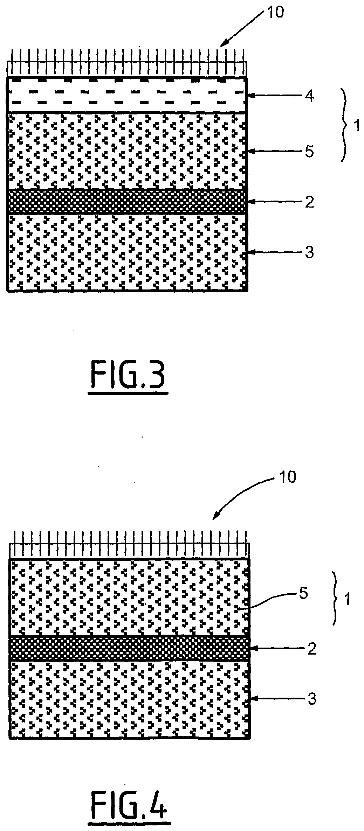

Un troisième composant moulé d'insonorisation, destiné à être disposé sur une tôle d'un plancher de véhicule automobile pour former un tapis est représenté sur la Figure 3.

Ce troisième composant diffère uniquement du deuxième composant représenté sur la Figure 2 par la présence d'une couche décorative 10 qui est placée au dessus de la couche résistive 4. Cette couche décorative est réalisée à base de moquette, par exemple à base de Dilour ou d'un aiguilleté plat ou de tuft.

La couche 10 présente une masse surfacique comprise entre 200 g/m2 et 700 g/m2, avantageusement égale à 550 g/m2.

Un quatrième composant moulé d'insonorisation, destiné à être fixé sur une tôle d'un plancher de véhicule automobile pour former un tapis est représenté sur la Figure 4.

Ce composant diffère uniquement du deuxième composant représenté sur la Figure 2 en ce que la couche résistive 4 est remplacée par une couche décorative 10 telle que décrite ci-dessus.

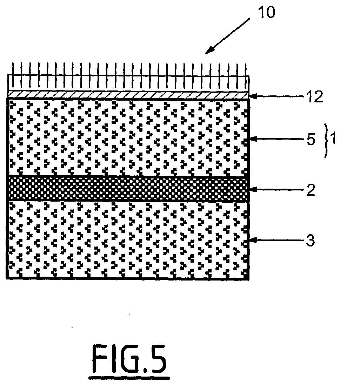

Un cinquième composant moulé d'insonorisation, destiné à être disposé sur une tôle d'un plancher de véhicule automobile pour former un tapis est représenté sur la Figure 5.

Ce composant diffère uniquement du quatrième composant représenté sur la Figure 4 en ce qu'un film intermédiaire fin étanche 12 est interposé entre la couche décorative 10 telle que décrite ci-dessus et la couche poreuse 5.

Le film intermédiaire fin 12 présente une épaisseur inférieure à 500 µm et comprise par exemple entre 10 µm et 500 µm, avantageusement égale à 50 µm. Il présente ainsi une masse surfacique comprise entre 10 g/m² et 200 g/m², avantageusement égale à 50 g/m².

Ce film 12 est étanche au passage de l'air. Il est réalisé par exemple à base d'un polymère thermoplastique monocouche comme du polyéthylène, du polypropylène, du polyester ou un copolymère poly(éthylène styrène). En variante, le film 12 est réalisé à base d'un polymère thermoplastique multicouches, par exemple à base de polyéthylène / polyamide, de polyéthylène / polyamide / polyéthylène. Avantageusement, le film 12 est un film bicouche à base de polyamide / polyéthylène.

La couche décorative 10 est appliquée sur le film 12, lequel est appliqué sur la couche poreuse 5. Dans le cas d'une utilisation du composant comme tapis appliqué sur le plancher du véhicule, le film 12 assure une étanchéité à l'eau pour empêcher l'eau de pénétrer dans la couche poreuse 5.

D'une manière générale, les composants d'insonorisation selon l'invention comprenant une couche intermédiaire densifiée 2 étanche telle que décrite plus haut en combinaison avec la couche poreuse 3 de base, présentent de manière surprenante une excellente isolation acoustique, très supérieure à celle des composants de type bi-perméables connus de l'état de la technique.

L'ajout d'une couche résistive 4 telle que décrite plus haut améliore en outre significativement l'absorption acoustique, et même de manière surprenante l'isolation acoustique de l'ensemble.

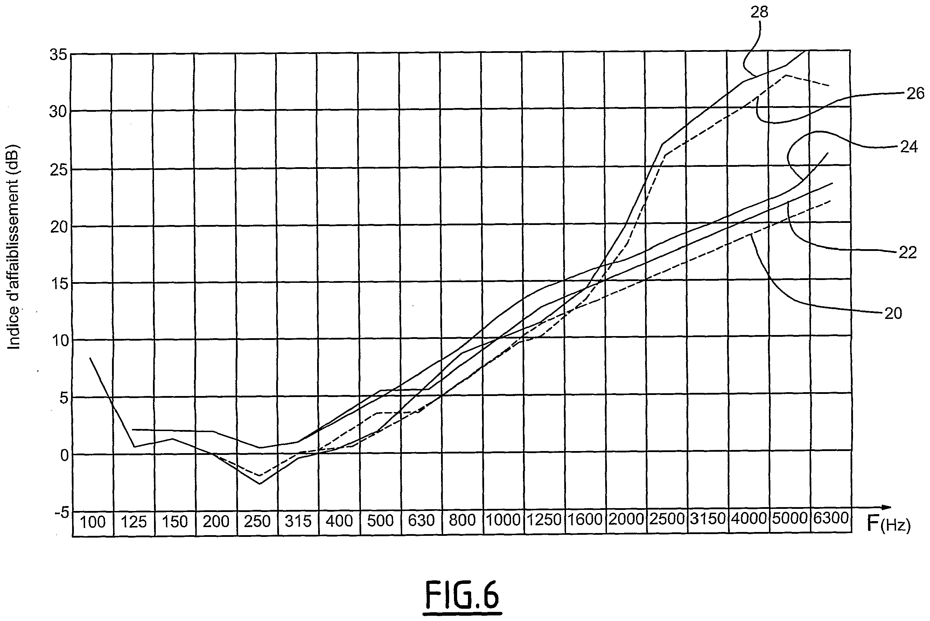

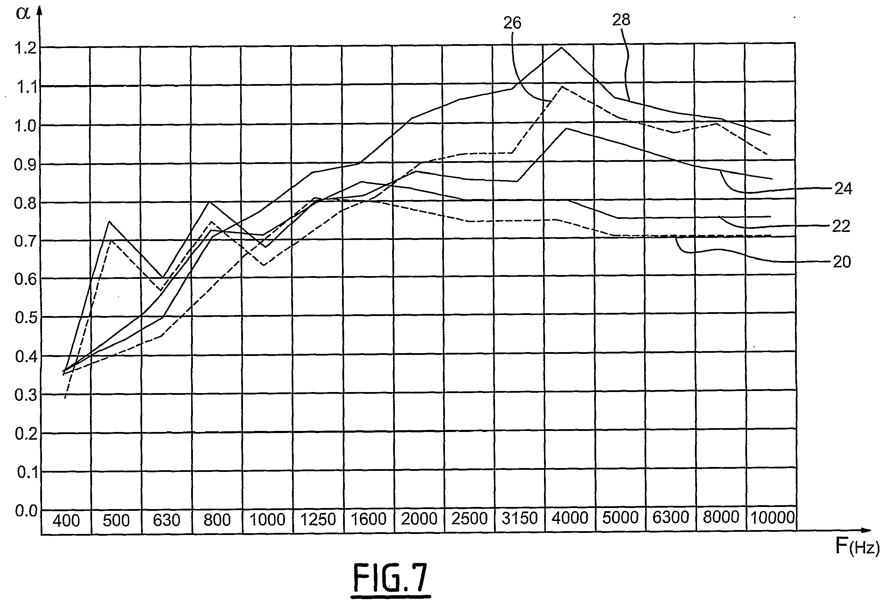

A titre d'illustration, les Figures 6 et 7 illustrent des mesures de l'indice d'affaiblissement en dB et du coefficient d'absorption en champ diffus a en fonction de la fréquence F pour un composant tri-couches pour tablier selon l'invention, tel que représenté sur la Figure 1, pour un composant quadri-couches pour tablier selon l'invention, tel que représenté sur la Figure 2, et pour un composant bi-perméable de l'état de la technique.

Dans ces exemples de réalisation de l'invention, la couche poreuse 1, 5 est réalisée à base d'un feutre de masse surfacique égale à 1200 g/m2 et d'épaisseur égale à 7 mm. La deuxième couche poreuse 3 est réalisée à base d'une mousse de polyuréthanne d'épaisseur égale à 13 mm.

La couche intermédiaire 2 présente une épaisseur sensiblement égale à 1,5 mm.

Le composant de l'état de la technique présente une couche poreuse en feutre comprimé de densité égale à 1800 g/m2 et d'épaisseur égale à 6 mm, collée sur une couche de mousse de polyuréthanne d'épaisseur égale à 16 mm.

En référence aux Figures 6 et 7, la courbe 20 est la spécification minimale attendue par le constructeur et la courbe 22 est la spécification supérieure.

La courbe 24 correspond à l'ensemble bi-perméable de l'état de la technique et les courbes 26, 28 correspondent respectivement au composant tri-couches de la Figure 1 et au composant quadri-couches de la Figure 2.

Comme on peut l'observer sur la Figure 6, les composants selon l'invention (courbes 26, 28) présentent de manière surprenante une isolation acoustique nettement améliorée par rapport au composant de l'état de la technique (courbe 24), notamment dans la gamme de fréquences supérieures à 1600 Hz, ainsi qu'une absorption acoustique meilleure, comme illustré par la Figure 7.

En outre, la présence d'une couche résistive 4 (courbes 28) améliore encore sensiblement l'isolation à partir de 400Hz et augmente significativement l'absorption sur toute la gamme de fréquences étudiée.

## Revendications

1. Procédé de fabrication d'un composant moulé d'insonorisation, le procédé comprenant :
la disposition de la première couche poreuse (1) sur une partie de paroi d'une cavité de moule ayant la forme voulue par le composant d'insonorisation, la première couche (1) n'occupant pas toute la cavité,
et
l'injection d'une composition polymère de moussage dans la cavité du moule pour la formation d'une seconde couche poreuse (3) à cellules ouvertes, le composant comprenant une première couche poreuse (1) et une seconde couche poreuse (3) à cellules ouvertes, et, entre ces deux couches poreuses, une couche intermédiaire (2) étanche à l'air
le procédé comportant la disposition de la couche intermédiaire (2) étanche à l'air sur la première couche poreuse (1), la première couche n'occupant pas toute la cavité, **caractérisé en ce que** les deux étapes de disposition de la couche intermédiaire (2) étanche à l'air sur la première couche poreuse (1) et d'injection d'une composition polymère pour la formation de la seconde couche poreuse (3) sont exécutées simultanément en une seule étape d'injection de la composition polymère de moussage, au contact de la première couche (1), dans des conditions telles que la composition polymère forme, avec la matière de la première couche (1),
la couche intermédiaire (2) étanche à l'air qui est plus dense que chacune des première et seconde couches poreuses (1, 3), la couche intermédiaire (2) et la seconde couche poreuse (3) étant réalisées d'une manière telle que la composition fluide injectée pour la formation de la seconde couche poreuse pénètre dans la structure poreuse de la première couche poreuse.

2. Procédé selon la revendication 1, **caractérisé en ce que** l'épaisseur de la couche intermédiaire après injection est comprise entre 10% et 20% de l'épaisseur de la première couche poreuse.

3. Procédé selon l'une quelconque des revendications précédentes, **caractérisé en ce que** la couche intermédiaire (2) présente une masse surfacique comprise entre 100 g/m² et 1000 g/m².

4. Procédé selon l'une quelconque des revendications 1 à 3, **caractérisé en ce que** la disposition de la première couche (1) comprend la pose d'une couche d'un matériau poreux sur une paroi du moule, le matériau poreux étant choisi parmi un feutre et une couche de mousse.

5. Procédé selon la revendication 4, **caractérisé en ce que** la première couche poreuse présente au moins une couche poreuse de résistance au passage de l'air comprise entre 200 N.m⁻³.s et 3500 N.m⁻³.s.

6. Procédé selon la revendication 4 ou 5, **caractérisé en ce que** le matériau poreux de la première couche (1) est muni d'une couche poreuse (5) dont la surface externe porte une couche (4) de plus grande résistance au passage de l'air, **caractérisé en ce que** l'étape de disposition de la première couche (1) comprend la pose de la couche (1) du matériau poreux de manière que la couche (4) de plus grande résistance au passage de l'air soit placée contre la paroi du moule.

7. Procédé selon la revendication 6, **caractérisé en ce que** la couche (4) de plus grande résistance au passage de l'air présente une résistance au passage de l'air comprise entre 200 N.m⁻³.s et 2000 N.m⁻³.s.

8. Composant moulé d'insonorisation, comprenant une première couche poreuse (1) et une seconde couche poreuse (3) à cellules ouvertes, et, entre ces deux couches poreuses, une couche intermédiaire (2) étanche à l'air, tel que la couche intermédiaire (2) est constituée uniquement des matériaux des deux couches poreuses (1, 3), **caractérisé en ce que** le composant moulé d'insonorisation est réalisé par mise en oeuvre du procédé selon l'une quelconque des revendications précédentes.

9. Composant selon la revendication 8, **caractérisé en ce que** l'épaisseur de la couche intermédiaire (2) est comprise entre 10% et 20% de l'épaisseur de la première couche poreuse.

10. Composant selon la revendication 8 ou 9, **caractérisé en ce que** la couche intermédiaire (2) présente une masse surfacique comprise entre 100 g/m² et 1000 g/m².

11. Composant selon l'une quelconque des revendications 8 à 10, **caractérisé en ce que** la première couche poreuse est munie d'une couche poreuse (5) dont la surface externe porte une couche (4) de plus grande résistance au passage de l'air.

12. Composant selon la revendication 11, **caractérisé en ce que** la couche (4) de plus grande résistance au passage de l'air présente une résistance au passage de l'air comprise entre 200 N.m⁻³.s et 2000 N.m⁻³.s.

13. Composant selon l'une quelconque des revendications 8 à 12, **caractérisé en ce qu'**il comprend une couche décorative de moquette (10) disposée sur la première couche poreuse (1), éventuellement avec interposition d'un film fin étanche (12).

## Patentansprüche

1. Verfahren zur Herstellung eines geformten Schallschutzbauteils, wobei das Verfahren umfasst:
Anordnen der ersten porösen Schicht (1) auf ein Wandteil eines Formhohlraums, der die von dem Schallschutzbauteil gewünschte Form aufweist, wobei die erste Schicht (1) nicht den ganzen Hohlraum einnimmt,
und
Einspritzen einer Polymer-Aufschäumzusammensetzung in den Hohlraum der Form für die Bildung einer zweiten porösen, offenzelligen Schicht (3), wobei das Bauteil eine erste poröse Schicht (1) und eine zweite poröse, offenzellige Schicht (3) und zwischen den zwei porösen Schichten eine luftdichte Zwischenschicht (2) umfasst,
wobei das Verfahren das Anordnen der luftdichten Zwischenschicht (2) auf der ersten porösen Schicht (1) aufweist, wobei die erste Schicht nicht den gesamten Hohlraum einnimmt,
**dadurch gekennzeichnet, dass**
die zwei Schritte des Anordnens der luftdichten Zwischenschicht (2) auf der ersten porösen Schicht (1) und des Einspritzens einer Polymer-Zusammensetzung für die Bildung der zweiten porösen Schicht (3) gleichzeitig in einem einzigen Einspritzschritt der Polymer-Aufschäumzusammensetzung im Kontakt mit der ersten Schicht (1) bei Bedingungen ausgeführt werden, dass die Polymer-Zusammensetzung mit dem Material der ersten Schicht (1),
die luftdichte Zwischenschicht bildet, die dichter ist als sowohl die erste als auch die zweite poröse Schicht (1, 3), wobei die Zwischenschicht (2) und die zweite poröse Schicht (3) derart hergestellt werden, dass die flüssige für die Bildung der zweiten porösen Schicht eingespritzte Zusammensetzung in die poröse Struktur der ersten porösen Schicht eindringt.

2. Verfahren nach Anspruch 1, **dadurch gekennzeichnet, dass** die Dicke der Zwischenschicht nach dem Einspritzen zwischen 10% und 20% der Dicke der ersten porösen Schicht aufweist.

3. Verfahren nach einem beliebigen der vorhergehenden Ansprüche, **dadurch gekennzeichnet, dass** die Zwischenschicht (2) ein Flächengewicht zwischen 100 g/m² und 1000 g/m² aufweist.

4. Verfahren nach einem beliebigen der Ansprüche 1 bis 3, **dadurch gekennzeichnet, dass** das Anordnen der ersten Schicht (1) das Aufbringen einer Schicht eines porösen Materials auf eine Wand der Form umfasst, wobei das poröse Material ausgewählt ist aus Filz und einer Schaumschicht.

5. Verfahren nach Anspruch 4, **dadurch gekennzeichnet, dass** die erste poröse Schicht mindestens eine poröse Schicht mit einem Luftwiderstand zwischen 200 N.m⁻³.s und 3500 N.m⁻³.s aufweist.

6. Verfahren nach Anspruch 4 oder 5, **dadurch gekennzeichnet, dass** das poröse Material der ersten Schicht (1) mit einer porösen Schicht (5) versehen ist, deren Außenfläche eine Schicht (4) mit größerem Luftwiderstand trägt, **dadurch gekennzeichnet, dass** der Schritt des Anordnens der ersten Schicht (1) das Aufbringen der Schicht (1) des porösen Materials aufweist, derart, dass die Schicht (4) mit größerem Luftwiderstand gegen die Formwand angeordnet wird.

7. Verfahren nach Anspruch 6, **dadurch gekennzeichnet, dass** die Schicht (4) mit größerem Luftwiderstand einen Luftwiderstand zwischen 200 N.m⁻³.s und 2000 N.m⁻³.s aufweist.

8. Geformtes Schallschutzbauteil, eine erste poröse Schicht (1) und eine zweite offenzellige poröse Schicht (3) und zwischen den zwei porösen Schichten eine luftdichte Zwischenschicht (2) umfassend, derart, dass die Zwischenschicht (2) nur aus den Materialien der zwei porösen Schichten (1, 3) gebildet ist, **dadurch gekennzeichnet, dass** das geformte Schallschutzbauteil hergestellt wird durch Ausführen des Verfahrens nach einem beliebigen der vorhergehenden Ansprüche.

9. Bauteil nach Anspruch 8, **dadurch gekennzeichnet, dass** die Dicke der Zwischenschicht (2) zwischen 10% und 20% der Dicke der ersten porösen Schicht liegt.

10. Bauteil nach Anspruch 8 oder 9, **dadurch gekennzeichnet, dass** die Zwischenschicht (2) ein Flächengewicht zwischen 100 g/m² und 1000 g/m² aufweist.

11. Bauteil nach einem beliebigen der Ansprüche 8 bis 10, **dadurch gekennzeichnet, dass** die erste poröse Schicht mit einer porösen Schicht (5) versehen ist, deren Außenfläche eine Schicht (4) mit größerem Luftwiderstand trägt.

12. Bauteil nach Anspruch 11, **dadurch gekennzeichnet, dass** die Schicht (4) mit größerem Luftwiderstand einen Luftwiderstand zwischen 200 N.m⁻³.s und 2000 N.m⁻³.s aufweist.

13. Bauteil nach einem beliebigen der Ansprüche 8 bis 12, **dadurch gekennzeichnet, dass** es eine dekorative Teppichschicht (10) umfasst, die auf der ersten porösen Schicht (1) gegebenenfalls mit der Zwischenlage eines dünnen dichten Films (12) angeordnet ist.

## Claims

1. Method for producing a moulded sound-proofing component the method comprising:
arrangement of the first porous layer (1) on a wall portion of a mould cavity having the shape desired by the sound-proofing component, the first layer (1) not occupying the whole cavity, and
the injection of a polymer foaming composition into the cavity of the mould in order to form a second porous layer (3) having open cells,
the component comprising a first porous layer (1) and a second porous layer (3) having open cells and, between those two porous layers, an intermediate layer (2) which is air-tight
the process comprising the arrangement of the intermediate layer (2) which is air-tight on the first porous layer (1), the first layer not occupying the whole cavity,
**characterized in that** the two steps of providing the air-tight intermediate layer (2) on the first porous layer (1) and injecting a polymer composition in order to form the second porous layer (3) are carried out simultaneously in a single injection step for the polymer foaming composition, in contact with the first layer (1) under such conditions that the polymer composition forms, with the material of the first layer (1),
the air-tight intermediate layer (2) which is denser than each of the first and second porous layers (1, 3), the intermediate layer (2) and the second porous layer (3) being produced in such a manner that the fluid composition injected in order to form the second porous layer penetrates into the porous structure of the first porous layer.

2. Method according to claim 1, **characterised in that** the thickness of the intermediate layer after injection is between 10% and 20% of the thickness of the first porous layer.

3. Method according to any one of the preceding claims, **characterised in that** the intermediate layer (2) has a mass per unit area of between 100 g/m² and 1000 g/m².

4. Method according to any one of claims 1 to 3, **characterised in that** the arrangement of the first layer (1) comprises positioning of a layer of a porous material on a wall of the mould, the porous material being selected from a felt and a foam layer.

5. Method according to claim 4, **characterised in that** the first porous layer has at least one porous layer having resistance to passage of air of between 200 N.m⁻³.s and 3500 N.m⁻³.s.

6. Method according to claim 4 or claim 5, **characterised in that** the porous material of the first layer (1) is provided with a porous layer (5) whose external surface carries a layer (4) having greater resistance to passage of air, **characterised in that** the step of providing the first layer (1) comprises the positioning of the layer (1) of the porous material in such a manner that the layer (4) having greater resistance to passage of air is positioned against the wall of the mould.

7. Method according to claim 6, **characterised in that** the layer (4) having greater resistance to passage of air has a resistance to passage of air of between 200 N.m⁻³.s and 2000 N.m⁻³.s.

8. Moulded sound-proofing component, comprising a first porous layer (1) and a second porous layer (3) having open cells and, between those two porous layers, an intermediate layer (2) which is air-tight, such that the intermediate layer (2) is constituted only by the materials of the two porous layers (1, 3) **characterized in that** the moulded sound-proofing component is produced by carrying out the method according to any one of the preceding claims.

9. Component according to claim 8, **characterised in that** the thickness of the intermediate layer (2) is between 10% and 20% of the thickness of the first porous layer.

10. Component according to claim 8 or claim 9, **characterised in that** the intermediate layer (2) has a mass per unit area of between 100 g/m² and 1000 g/m².

11. Component according to any one of claims 8 to 10, **characterised in that** the first porous layer is provided with a porous layer (5) whose external surface carries a layer (4) having greater resistance to passage of air.

12. Component according to claim 11, **characterised in that** the layer (4) having greater resistance to passage of air has a resistance to passage of air of between 200 N.m⁻³.s and 2000 N.m⁻³.s.

13. Component according to any one of claims 8 to 12, **characterised in that** it comprises a decorative matting layer (10) which is provided on the first porous layer (1), optionally with a fine fluid-tight film (12) being interposed.
